# EUROPEAN PATENT APPLICATION

(11) **EP 4 040 095 A2**
(43) Date of publication of application: **10.08.2022**
(21) Application number: 22155288.8
(22) Date of filing: 04.02.2022
(51) Int. Cl.: F25J 1/00, F25J 1/02

(54) **METHOD AND SYSTEM FOR DECARBONIZED LNG PRODUCTION**

(30) Priority: 05.02.2021 US 202117168770
(71) Applicant: Air Products and Chemicals, Inc., Allentown, PA 18106-5500 (US)
(72) Inventor: WEIST, Annemarie, Ott, Macungie, 18062 (US); BEARD, Jeremy, D., Macungie, 18062 (US); GRAHAM, David, Ross, Harleysville, 19438 (US); PALAMARA, John, Eugene, Macungie, 180612 (US); ROBERTS, Mark, Julian, Whitehall, 18052 (US); VESKOVIC, Dejan, Allentown, 18104 (US)
(74) Representative: Beck Greener LLP

(57) **Abstract**

Integration of a natural gas liquefaction system, a hydrogen production system, and power generation system to increase CO2 capture and improve overall plant efficiency. The predominantly methane endflash is sent to the hydrogen production system which produces hydrogen and CO2. The CO2 may be captured or beneficially used. At least a portion of the hydrogen produced is used to fuel gas turbines in the power generation which, in turn, provides power for the refrigeration compressor of the natural gas liquefaction system - either in the form of mechanical work or electricity.

## Description

### BACKGROUND

Reduction of carbon dioxide ("CO2") emissions is becoming an increasingly desirable improvement for industrial processes, including the fields of hydrocarbon processing and electrical power generation.

The liquefaction of natural gas is a process having significant power requirements, primarily to drive the compressors necessary to support the liquefaction process. Efforts have been made to reduce the carbon "footprint" of natural gas liquefaction by reducing CO2 emissions by improving the efficiency of the liquefying process. For natural gas liquefaction plants (also referred to herein as "LNG plants") using gas turbines to drive refrigerant compressors, further reductions in CO2 emissions by efficiency improvement can be achieved by recovering heat from high temperature flue gas and using it beneficially. This heat may be recovered by generating steam and using a combined cycle to generate further power. Some LNG plants obtain the refrigeration compression power via electricity from the grid. Power plants supplying electricity can employ gas turbines with heat recovery steam generation systems for additional power and efficiency.

Some power plants have reduced CO2 emissions by using hydrogen as a fuel gas or fuel gas additive. The overall CO2 emissions are reduced if this hydrogen is made using green energy such as solar power or with a process that involves a natural gas feed and CO2 capture. Such processes for converting natural gas into hydrogen include the steam methane reforming process in which the CO2 is removed from the syngas and/or flue gas. Optionally, this low-carbon intensity hydrogen can be made via autothermal reforming or partial oxidation processes or gasification processes in which the CO2 is removed from the effluent syngas.

Such improvements often result in substantially higher energy costs and require energy sources that are external to the natural gas liquefaction process. Accordingly, there is a need for a more efficient and self-contained means of reducing CO2 emissions attributable the natural gas liquefaction process and the power necessary to drive the process.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

Several aspects of the systems and methods are outlined below.
Aspect 1 - A method comprising:
   (a) at least partially liquefying a natural gas feed stream in a natural gas liquefaction system to form an LNG stream, the natural gas liquefaction system including at least one compressor;
   (b) separating the LNG stream into a flash vapor stream and an LNG product stream;
   (c) passing at least a portion of the flash vapor stream to a hydrogen production system;
   (d) reacting at least a portion of the flash vapor stream in the hydrogen production system to form a hydrogen containing stream and a first CO2-enriched stream;
   (e) generating power in a power generating system using at least a portion of the hydrogen containing stream; and
   (f) providing power to the at least one compressor with at least a portion of the power generated in step (e).
Aspect 2 - The method of Aspect 1, wherein the flash vapor stream is at least 50 mol % methane.
Aspect 3 - The method of any of Aspects 1 through 2, wherein the hydrogen containing stream is at least 80 mol % hydrogen.
Aspect 4 - The method of any of Aspects 1 through 3, further comprising:
   (g) separating a second CO2-enriched stream from the natural gas feed stream before performing step (a); and
   (h) combining the first CO2-enriched stream and the second CO2-enriched stream for form a combined CO2 stream.
Aspect 5 - The method of Aspect 4, further comprising:
   (i) using refrigeration duty from the natural gas liquefaction system, liquefying at least a portion of one selected from the group of the first CO2-enriched stream, the second CO2-enriched stream, and the combined CO2-enriched stream.
Aspect 6 - The method of any of Aspects 1 through 5, wherein step (d) further comprises reacting at least a portion of the flash vapor stream and an ambient air stream in the hydrogen production system to form the hydrogen containing stream and the first CO2-enriched stream.
Aspect 7 - The method of any of Aspects 1 through 6, wherein step (d) further comprises reacting at least a portion of the flash vapor stream and an oxygen containing stream in the hydrogen production system to form the hydrogen containing stream, the first CO2-enriched stream, a first steam stream, and a waste nitrogen stream.
Aspect 8 - The method of Aspect 7, wherein the oxygen containing stream is ambient air.
Aspect 9 - The method of Aspect 7, further comprising:
   (j) passing an ambient air stream through an air separation unit to produce the oxygen containing stream and a nitrogen enriched stream.
Aspect 10 - The method of Aspect 9, wherein step (e) further comprises generating power in a power generating system using the hydrogen containing stream and at least a portion of the nitrogen enriched stream.
Aspect 11 - The method of any of Aspects 1 through 10, wherein step (e) further comprises generating power in a power generating system using the hydrogen containing stream and at least one steam stream from the hydrogen production system or power generating system.
Aspect 12 - The method of any of Aspects 1 through 11, wherein step (e) further comprises generating power in a power generating system using the hydrogen containing stream to drive at least one gas turbine and a first steam stream to drive at least one steam turbine.
Aspect 13 - The method of any of Aspects 1 through 12, wherein the power generated in step (e) comprises electrical power and step (f) comprises providing at least a portion of the electrical power to at least one motor attached to the at least one compressor.
Aspect 14 - The method of any of Aspects 1 through 13, wherein the power generated in step (e) comprises electrical power and step (f) comprises providing at least a portion of the electrical power to at least one of the hydrogen production system and the natural gas liquefaction system.
Aspect 15 - The method of any of Aspects 1 through 14, wherein the power generated in step (e) comprises electrical power and the method further comprises:
   (k) exporting at least a portion of the electrical power to a process that is external to the natural gas liquefaction system, the hydrogen production system, and the power generating system.
Aspect 16 - The method of any of Aspects 1 through 15, wherein step (e) further comprises generating power in a power generating system using the hydrogen containing stream and at least one methane-containing stream.
Aspect 17 - The method of Aspect 16, wherein the at least one methane-containing stream comprises at least one selected from the group of a natural gas feed stream and the flash vapor stream.
Aspect 18 - The method of any of Aspects 1 through 17, further comprising:
   (I) exporting at least a portion of the hydrogen containing stream produced in step (d) to a use that is external to the natural gas liquefaction system, the hydrogen production system, and the power generating system.
Aspect 19 - The method of any of Aspects 1 through 18, wherein step (f) comprises driving the at least one compressor by mechanically coupling at least one gas turbine of the power generating system to the at least one compressor of the natural gas liquefaction system.
Aspect 20 - The method of any of Aspects 1 through 19, further comprising:
   (m) cooling the hydrogen production system using refrigeration from the natural gas production system.
Aspect 21 - The method of any of Aspects 1 through 20, further comprising:
   (n) using heat generated from at least one of the hydrogen production system and the power generating system to provide heat duty for drier unit, the drier until being adapted to separate moisture from a natural gas feed stream for the natural gas liquefaction system.
Aspect 22 - The method of any of Aspects 1 through 21, further comprising:
   (o) dividing the natural gas feed stream into a first portion and a second portion, performing step (a) on the first portion of the natural gas feed stream, and combining the second portion of the natural gas feed stream with the flash vapor stream before performing step (d).
Aspect 23 - The method of any of Aspects 1 through 22, wherein step (a) comprises at least partially liquefying the natural gas feed stream in the natural gas liquefaction system to form the LNG stream, the natural gas liquefaction system including a closed loop refrigeration system having at least one compressor.
Aspect 24 - A method of retrofitting an existing natural gas liquefaction system that at least partially liquefies natural gas feed stream at a feed temperature to form an LNG product at a product temperature, the natural gas liquefaction system comprising at least one compressor, the method comprising:
   (a) adding a hydrogen production system that reacts at least a portion of endflash produced by the natural gas liquefaction system to form a hydrogen-containing stream;
   (b) generating power in a power generating system using the hydrogen containing stream; and
   (c) providing power to the at least one compressor with at least a portion of the power generated in step (b).
Aspect 25 - The method of Aspect 24, further comprising:
   (d) decreasing a difference between the feed temperature and the product temperature, thereby producing more endflash per cubic foot of natural gas processed than was produced prior to retrofit.
Aspect 26 - The method of any of Aspects 24 through 25, further comprising:
   (e) adding the power generating system.
Aspect 27 - The method of any of Aspects 24 through 26, wherein the power generating system was adapted to provide power to the natural gas liquefaction system prior to retrofit, the method further comprising:
   (f) modifying at least one existing gas turbine in the power generating system to be fueled by the hydrogen containing stream.
Aspect 28 - The method of Aspect 27, further comprising:
   (g) generating more power with at least one existing gas turbine after retrofit than prior to retrofit.
Aspect 29 - The method of any of Aspects 24 through 28, further comprising:
   (h) producing a second mass flow rate of LNG product into an LNG storage tank after retrofit that no less than a first mass flow rate of LNG product into the LNG storage tank produced prior to retrofit.
Aspect 30 - The method of any of Aspects 24 through 29, further comprising:
   (i) separating at least 80% of carbon dioxide contained in the endflash using the hydrogen production system.

### BRIEF DESCRIPTION OF THE DRAWING(S)

The present invention will hereinafter be described in conjunction with the appended drawing figures wherein like numerals denote like elements.
FIG. 1 is a block diagram showing a first exemplary embodiment of interconnected natural gas liquefaction, hydrogen production, and power generation systems;
FIG. 2 is a block diagram showing the natural gas liquefaction system of FIG. 1 in greater detail;
FIG. 3 is a block diagram showing the hydrogen production system of FIG. 1 in greater detail;
FIG. 4 is a block diagram showing the power generation system of FIG. 1 in greater detail;
FIG. 5 is a block diagram showing a first alternate embodiment of the natural gas liquefaction system of FIG. 1;
FIG. 6 is a block diagram showing a first alternate embodiment of the power production system of FIG. 1;
FIG. 7 is a table showing fluid composition and physical parameters at multiple stream locations of the exemplary embodiment shown in FIGS. 1-4; and
FIG. 8 is a continuation of the table shown in FIG. 7.

### DETAILED DESCRIPTION OF THE PREFERRED EMBODIMENT(S)

The ensuing detailed description provides preferred exemplary embodiments only, and is not intended to limit the scope, applicability, or configuration of the invention. Rather, the ensuing detailed description of the preferred exemplary embodiments will provide those skilled in the art with an enabling description for implementing the preferred exemplary embodiments of the invention. It being understood that various changes may be made in the function and arrangement of elements without departing from the spirit and scope of the invention.

In order to aid in describing the invention, directional terms may be used in the specification and claims to describe portions of the present invention (e.g., upper, lower, left, right, etc.). These directional terms are merely intended to assist in describing and claiming the invention and are not intended to limit the invention in any way. In addition, reference numerals that are introduced in the specification in association with a drawing figure may be repeated in one or more subsequent figures without additional description in the specification in order to provide context for other features.

The term "conduit," as used in the specification and claims, refers to one or more structures through which fluids can be transported between two or more components of a system. For example, conduits can include pipes, ducts, passageways, and combinations thereof that transport liquids, vapors, and/or gases.

As used in the specification and claims, the term "flow communication" is intended to mean that two or more elements are connected (either directly or indirectly) in a manner that enables fluids to flow between the elements, including connections that may contain valves, gates, tees, or other devices that may selectively restrict, merge, or separate fluid flow.

The term "natural gas", as used in the specification and claims, means a hydrocarbon gas mixture consisting primarily of methane.

The terms "hydrocarbon", "hydrocarbon gas", or "hydrocarbon fluid", as used in the specification and claims, means a gas/fluid comprising at least one hydrocarbon and for which hydrocarbons comprise at least 80%, and more preferably at least 90% of the overall composition of the gas/fluid.

As used in the specification and claims, the terms "high-high", "high", "medium", "low", and "low-low" are intended to express relative values for a property of the elements with which these terms are used. For example, a high-high pressure stream is intended to indicate a stream having a higher pressure than the corresponding high pressure stream or medium pressure stream or low pressure stream described or claimed in this application. Similarly, a high pressure stream is intended to indicate a stream having a higher pressure than the corresponding medium pressure stream or low pressure stream described in the specification or claims, but lower than the corresponding high-high pressure stream described or claimed in this application. Similarly, a medium pressure stream is intended to indicate a stream having a higher pressure than the corresponding low pressure stream described in the specification or claims, but lower than the corresponding high pressure stream described or claimed in this application.

Unless otherwise stated herein, any and all percentages identified in the specification, drawings and claims should be understood to be on a mass percentage basis. Unless otherwise stated herein, any and all pressures identified in the specification, drawings and claims should be understood to mean gauge pressure.

As used in the specification and claims, the term "compression system" is defined as one or more compression stages. For example, a compression system may comprise multiple compression stages within a single compressor. In an alternative example, a compression system may comprise multiple compressors.

Unless otherwise stated herein, introducing a stream at a location is intended to mean introducing substantially all of the said stream at the location. All streams discussed in the specification and shown in the drawings (typically represented by a line with an arrow showing the overall direction of fluid flow during normal operation) should be understood to be contained within a corresponding conduit. Each conduit should be understood to have at least one inlet and at least one outlet. Further, each piece of equipment should be understood to have at least one inlet and at least one outlet.

In the claims, letters are used to identify claimed steps (e.g. (a), (b), and (c)). These letters are used to aid in referring to the method steps and are not intended to indicate the order in which claimed steps are performed, unless and only to the extent that such order is specifically recited in the claims.

Key features of all the exemplary embodiments described herein include an LNG liquefier with one or more refrigeration compressors that produces LNG and an endflash gas from a natural gas feed, the endflash gas (predominantly methane) is sent to a hydrogen production system which produces hydrogen and carbon dioxide. The CO2 may be captured or beneficially used. For example, the CO2 could be compressed, liquefied, utilized in another process, liquefied in the pre-cooling portion of the LNG plant, or processed via other means. After these steps, the CO2 could be used for enhanced oil recovery, stored, sequestered, sold, utilized in another process, or used for another purpose. Optionally, CO2 could be extracted from the natural gas feed via an acid gas removal unit and combined with the CO2 effluent stream from hydrogen production. At least a portion of the hydrogen produced is then sent to gas turbines in a power generation system that provides power for the refrigeration compressor(s) either directly by mechanical coupling of the gas turbine(s) to the compressors, or indirectly by generation of electricity from generators coupled to the gas turbine(s) that is consumed by electric motors coupled to the compressors.

It should be noted that, even though the exemplary natural gas liquefaction system embodiments disclosed herein all have closed-loop refrigeration, the inventive concepts disclosed herein are equally applicable to natural gas liquefaction systems using either open- or closed-loop compression.

Feeding the hydrogen production system with endflash that is predominately methane from the natural gas liquefaction system has several advantages. The efficiency of the Natural gas liquefaction system is improved since the refrigerant does not have to cool the LNG to as low a temperature. For example, assuming the same gas turbine refrigeration compressor drivers, endflash fuel demand increases by 10-20%, resulting in a 2-4 °F increase in outlet temperature from the main cryogenic heat exchanger. This results in a 1-2% decrease in refrigeration compressor power demand. In addition, more LNG is produced from a refrigeration system of the same size, or alternately, the size of the equipment including compressors, heat exchangers and pipes in the refrigeration system is smaller for the same production capacity. Finally, the system can produce LNG with acceptable nitrogen content from higher nitrogen feed gas, as feed nitrogen will concentrate in the endflash gas therefore decreasing the nitrogen content of the LNG. In addition, the methane endflash is relatively free of impurities, which reduces the need for a purification step for the methane feed gas used in the hydrogen production system.

Other further integration options between the three systems are described including using refrigeration from the natural gas liquefaction system to lower the power requirement or cost of an air separation unit associated with the hydrogen production system and using steam from the power generation system for process heating in the natural gas liquefaction system.

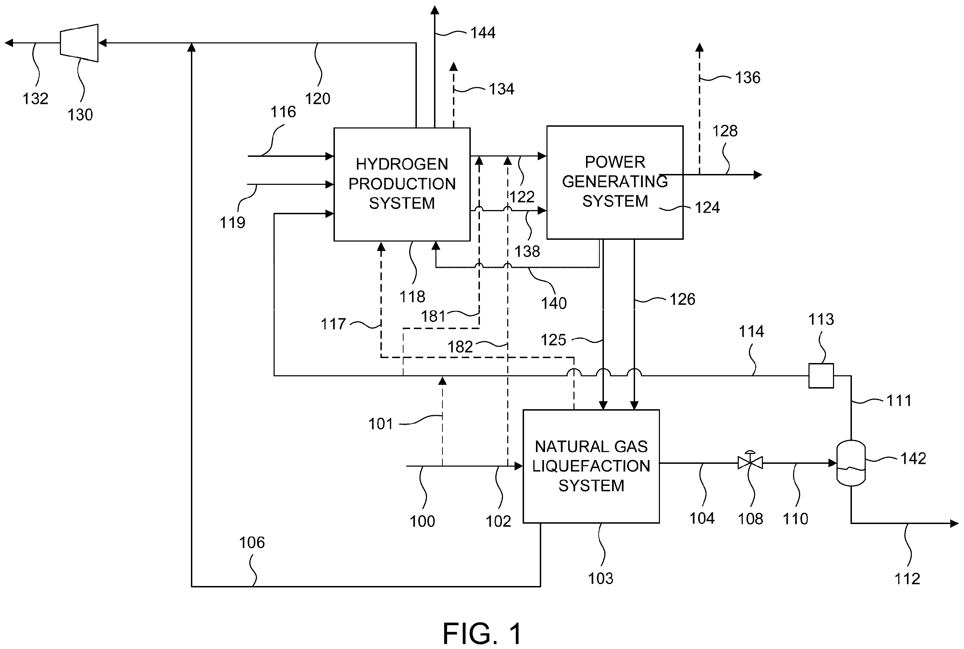

FIG. 1 shows the interconnection of three systems: a natural gas liquefaction system 103, a hydrogen production system 118, and a power generation system 124. A natural gas feed stream 100 may be divided into an optional stream 101 that is sent to the hydrogen production system and stream 102 which is sent to the natural gas liquefaction system 103. The natural gas liquefaction system 103 produces a CO2 containing stream 106 and a high-pressure LNG stream 104. The high-pressure LNG stream 104 is then flashed to a lower pressure in pressure reduction device 108, which may be a valve or work producing turbine. The resulting two phase stream 110 is separated in a phase separator 142 to form a vapor stream 111 and an LNG stream 112. In this embodiment, the phase separator 142 is a drum. Alternatively, a multistage distillation column could be used, particularly if nitrogen separation is desired. Heat in the form of steam as represented by heat stream 125 is also preferably provided by the power generation system 124 to the natural gas liquefaction system 103. Optionally, refrigeration from the natural gas liquefaction system 103 could be used to provide cooling to the hydrogen production system 118, as represented by heat stream 117.

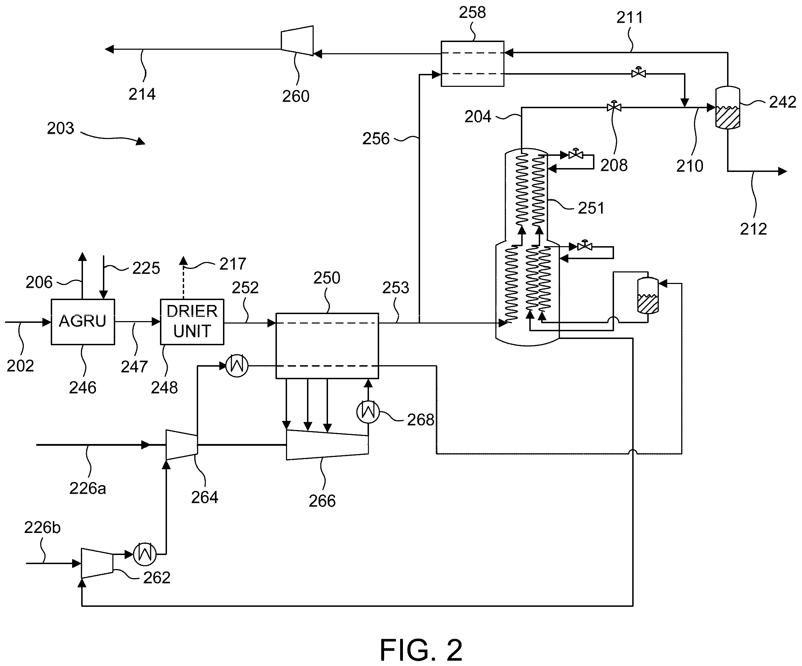

A predominantly methane flash vapor stream 114 is sent to the hydrogen production system 118 after compression and heat exchange steps (labeled 113), which will be described more fully in the description of FIG 2.

The hydrogen production system 118 uses an ambient air stream 116 and the flash vapor stream 114 to produce a hydrogen stream 122 and an intermediate pressure steam stream 138, which are both sent to power generation system 124, along with a waste nitrogen stream 144, an optional hydrogen product stream 134 (which may be sent to a pipeline), and a CO2 stream 120, which is combined with CO2 containing stream 106 from the natural gas liquefaction system 103, then compressed (via compressor 130) and sent to a pipeline or sequestered in underground storage via the compressed CO2 stream 132. In other embodiments, the hydrogen production system 118 could be configured to produce the hydrogen stream 122 only and not any steam streams. The process may include vent steams (not shown) which might include exhaust from fired heaters, steam vents, and waste water steams.

The power generation system 124 uses the hydrogen stream 122 and the intermediate pressure steam stream 138 from the hydrogen system 118 to produce electric power 128 for use in the overall facility and natural gas liquefaction system 103 (represented by line 126). Optionally electric power can be exported to a power grid via line 136. Power sent from the natural gas liquefaction system 103 via line 126 could take the form of electricity sent to motors attached to compressors or by mechanically coupling gas turbines in the power production system 124 to the refrigeration compressors of the natural gas liquefaction system 103.

FIG. 2 is a more detailed depiction of the natural gas liquefaction system 103 of FIG. 1, which is labeled 203 in FIG. 2. In this exemplary embodiment, the natural gas liquefaction system 203 comprises two identical trains so that the material and energy flowrates in each train are half of the total in the overall system. In this exemplary embodiment, an acid gas removal unit 246 is provided upstream of a pre-cooling system 250. The acid gas removal unit 246 may be any acid gas removal system known in the art, such as an amine-based absorption system. The natural gas feed stream 202 enters the acid gas removal unit 246, which separates the CO2 containing stream 206 from the natural gas, using heat in the form of steam provided from the power generation system (represented by line 225) to operate the reboiler of the amine-based removal unit. The stream 247 exiting the acid gas removal unit 246 is sent to a drier unit 248 for water removal to form a pre-treated gas stream 252.

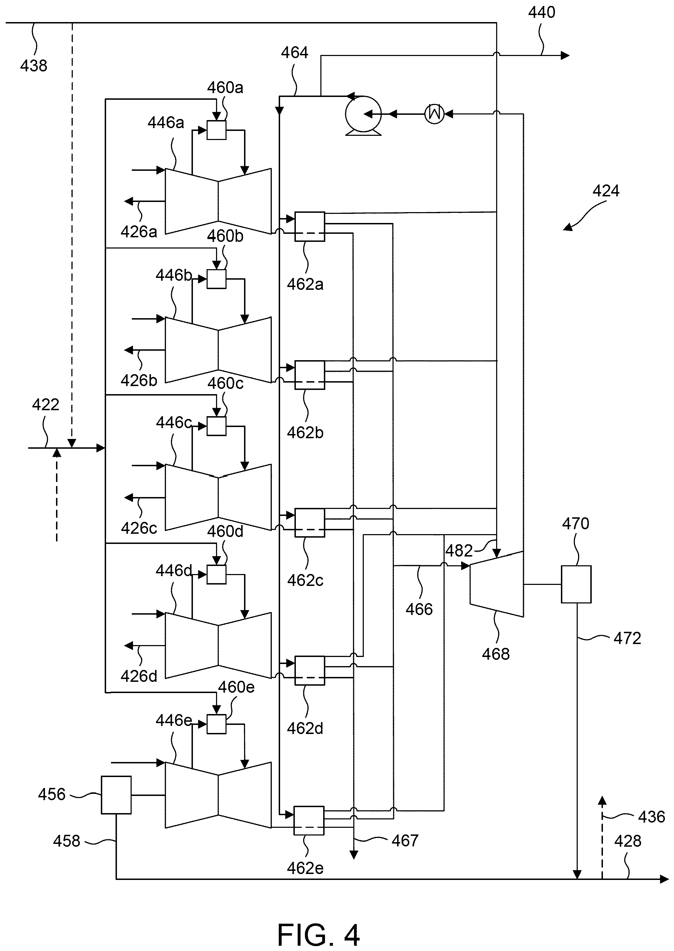

The natural gas liquefaction system 203 could use any known process for natural gas liquefaction. In this embodiment, a propane precooled, mixed refrigerant process is used. The process will not be described in detail because it is well-known in the art. The pre-treated feed gas stream 252 is cooled to about -30 degrees C by the pre-cooling system 250, followed by further cooling in a main heat exchanger 251 to -140 to -150 degrees C, exiting as stream 204. The high-pressure LNG stream 204 is then flashed to a lower pressure of 1-3 bara in pressure reduction device 208 which may be a valve or work producing turbine. Stream 256, which is typically less than 20% of the natural gas stream 253 exiting the pre-cooling system 250 is then further cooled in flash exchanger 258 while warming flash gas stream 211. The resulting two phase stream 210 is separated in 242 to form a vapor stream 211 and LNG stream 212. Vapor stream 211 is warmed to around -40 to -30 degrees C in flash exchanger before being compressed to preferably about 40 to 60 bara (more preferably about 40 to 50 bara) in compressor 260 to form stream 214. The vapor stream 214 may optionally include additional methane-containing gas from an LNG storage tank (not shown). Energy for the liquefaction process is mainly provided by three refrigeration compressors 262,264 and 266. Compressors 262 and 264 compress the vaporized low-pressure mixed refrigerant prior to precooling in the pre-cooling system 250. Compressor 266 compresses vaporized propane before it is condensed in ambient cooler 268 and returned to the propane system. In this embodiment, power for the compressors 262, 264, 266 is provided by mechanically coupling the compressors 262, 264, 266 to two identical gas turbine drivers located in the power generation system of FIG. 4, with this mechanical work input represented by work streams 226a and 226b. The first stage of MR compression 262 represents 50% of the total refrigeration power requirement with the second stage of MR compression 264 representing 20% of the total and the propane compressor consuming around 30% of the total.

In the arrangement shown, compressors 264 and 266 are connected to the same shaft powered by mechanical work stream 226a while compressor 262 is powered by mechanical work stream 226b, allowing for full utilization of the mechanical power provided by two equal gas turbine drivers located in the power generation system of FIG. 4. Another option for utilizing the power from the two equal gas turbine drivers (not shown) would be to split the propane and mixed refrigerant flows in half, compressing the refrigerants in parallel compressors. In this arrangement work streams 226a and 226b would power identical compression strings having three compressors each, mechanically coupled on two compressor shafts.

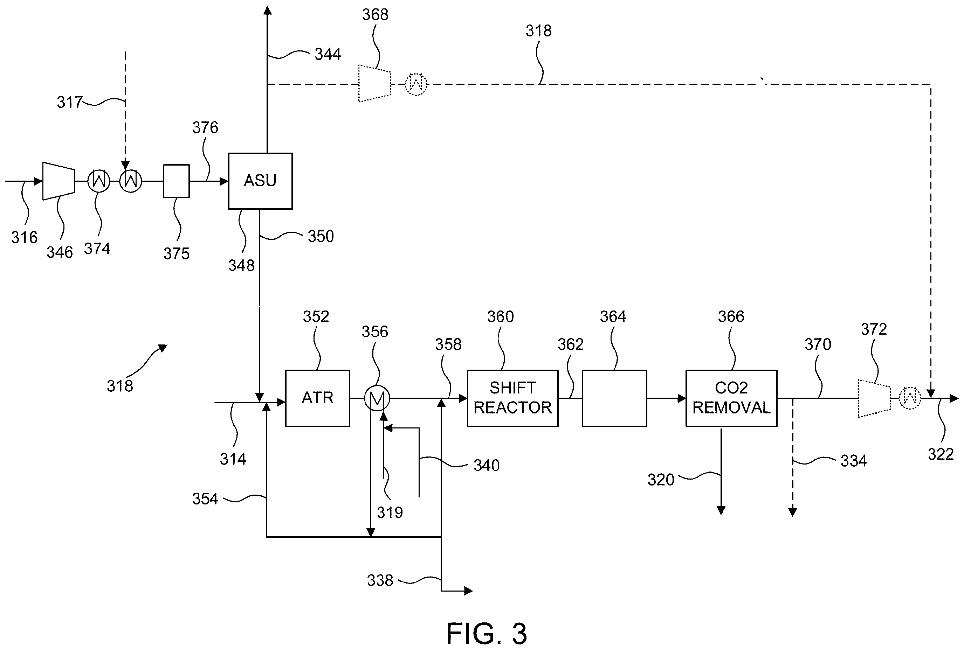

FIG. 3 is a more detailed depiction of an example of the hydrogen production system 118 of FIG. 1. In this figure, all elements are formatted 3XX. Elements having a reference number in FIG. 3 with the same last two digits XX as an item number shown in FIG. 1 are intended to refer to the same element as FIG. 1.

The ambient air stream 316 is compressed in a compressor 346, then cooled in an ambient cooler 374. Optionally, the compressed air stream may be further cooled using refrigeration from the natural gas liquefaction system 203 (represented by stream 317, which corresponds to the energy stream 217 of FIG. 2) to form a cooled, dry compressed air stream 376. Such cooling can improve the efficiency of the hydrogen production system 318, while reducing the size of an adsorption based drier system 375 without the addition of a separate chiller. The form of this cooling can either be through indirect heat exchange with an LNG refrigerant (represented by stream 317) or through an intermediary fluid, such as glycol.

The cooled, dry compressed air stream 376 is fed to a cryogenic air separation unit (ASU) 348. Other types of air separation technology such as adsorption or membranes may be used in place of the ASU 348. The ASU 348 produces an oxygen enriched stream 350 preferably having greater than about mole 95% 02, and a nitrogen stream 344. Additional optional product steams from the ASU 348 include gaseous argon, liquid argon, liquid oxygen, and liquid nitrogen. Further integration between the ASU and LNG plant can include sending a portion of the compressed air to the main heat exchanger 251 to be liquified. This integration may eliminate the ASU expander, thus lowing CAPEX.

Oxygen stream 350 is mixed with predominantly methane stream 314 and steam stream 354 then sent to an autothermal reformer (ATR) 352. In most applications, the steam stream 354 would be pre-heated before being introduced into the ATR 352. Reactions in the ATR 352 include a reforming reaction where methane and water form carbon monoxide and hydrogen (1), a shift reaction where carbon monoxide reacts with water to form hydrogen (2), and partial oxidation reactions involving methane, carbon monoxide, and hydrogen (3-5):

CH₄+ H₂O →CO+3H₂ (1)

CO+ H₂O →CO₂+H₂ (2)

2CH₄+O₂ →2CO+4H₂ (3)

CO+ 1/2O₂ →CO₂ (4)

H₂+ 1/2O₂ →H₂O (5)

In addition, various combinations of these reactions are possible.

Hot effluent from the ATR 352 is then cooled in a steam generator 356, which vaporizes a recycled water stream 340 (labeled 440 in FIG. 4) from the power generation system 124 and a water feed stream 319 (also labeled as stream 119 in FIG. 1). The water is treated and preheated before it enters the boiler (not shown). Additional steam can be added before feed stream 358 is then sent to shift reactor 360 where carbon monoxide and water are reacted to form carbon dioxide and hydrogen:

CO+H₂O → CO₂+H₂ (6)

In addition, various combinations of these reactions are possible. For example, the shift reactor could consist of a two-stage shift with cooling between stages.

Hydrogen containing stream 362 is then cooled (364) and sent to carbon dioxide removal unit 366 which removes carbon dioxide stream 320 from the hydrogen product. Unit 366 may be an adsorption system, for example, an amine-based carbon dioxide removal unit or alternate means to remove carbon dioxide such as adsorption system, membrane system, or partial condensation system. Addition optional processing could be done to remove impurities, such as carbon monoxide.

Optionally a hydrogen product stream 334 may be removed then further purified using, for example, a pressure swing adsorption system, and sent via pipeline, liquefied, or converted to ammonia for transport to external users.

After compression (via compressor 368), a portion 318 of the nitrogen from ASU 348 may optionally be added to a hydrogen stream 370. A compressor 372 may be used to compress the hydrogen before it's sent to the power generation system as stream 322 (labeled as 122 in FIG. 1 and 422 in FIG. 4).

Additional features of the ATR system for hydrogen generation can include: a prereformer, means to preheat feeds including oxygen, fired heater for feed preheating and steam superheating, various configurations of shift reactors including high temperature shift, medium temperature shift, low temperature shift, isothermal shift and/or combinations thereof, purification of the feed to remove trace impurities such as sulfur, recuperative reforming reactor, and/or a methanator to convert carbon monoxide to methane.

Although FIG. 3 was described in the context of autothermal reformers, other methods of hydrogen production could be used as well. These methods include partial oxidation of natural gas (POX), steam methane reformers (SMR), pryolosis reactors, gasification of various solid and liquid fuels, and electrolysis of water.

FIG. 4 is a more detailed depiction of an example of the power production system 124 of FIG. 1. In this figure, all elements are formatted 4XX. Elements having a reference number in FIG. 1 with the same last two digits XX as an item number shown in FIG. 4 are intended to refer to the same element as FIG. 1.

A hydrogen feed gas stream 422 may be blended with a portion of steam stream 438 before being sent to the combustors 460a-e of five parallel gas turbines 446a-e. Four of the turbines 446a-d are mechanically coupled to four compression strings in the two parallel trains of the natural gas liquefaction system (represented by work streams 226a, 226b) . The combined work streams of 426a-d are represented in FIG. 1 by line 126. For the first of the two parallel LNG production trains shown in FIG. 2, mechanical work streams 426a, 426c denote the same work stream as work stream 226a of FIG. 1, while work streams 426b, 426d denote the same work stream as work stream 226b of FIG. 1. The fifth gas turbine 446e is mechanically coupled to a generator 456, which produces electrical power 458. The hot exhaust stream from each turbine is sent to heat recovery steam generators 462a-e which vaporize water 464 producing high pressure steam 466.

The high pressure steam stream 466 and intermediate pressure steam 482 are then expanded in a work producing steam turbine 468, which is mechanically coupled to a generator 470, thereby producing electrical power 472. Low pressure steam 467 could be used advantageously to provide heat duty for the hydrogen production system 118 and/ or the natural gas liquefaction system 103. The steam turbine 468 and coupled generator 470 are depicted as a single unit in FIG. 4, but could each comprise multiple units in parallel. A portion of the electrical power produced by the generators 470, 456 may be sent to external power users (represented by line 436). The electrical energy represented by line 428 is direct to other electrical power needs within the facility, such as compressors, pumps, fan driven coolers, etc.. In addition, the water formed by the combustion of hydrogen in the gas turbines 446a-e could be collected and recycled in the hydrogen production system (e.g., combining with stream 319).

It is also possible to use steam generated by the power generation system 424 to drive additional steam turbine mechanical drives (not shown) for large compressors in the facility rather than electric motor drive. Steam turbines could be mechanically coupled to compressor 130, compressor 260, and / or compressor 346 for this purpose.

In some applications, it may be desirable to use a mixture of hydrogen and methane or natural gas to fuel the gas turbines 466a-e. In such applications, natural gas could be added to the hydrogen feed gas stream 422 from the natural gas feed stream 100 (represented by line 182 in FIG. 1) and/or endflash could be added to the hydrogen feed gas stream 422 from the flash vapor stream 114 (represented by line 181 in FIG. 1). In addition, it would be possible to create a mixed methane/hydrogen fuel stream to the power generation system 124 by operating the hydrogen production system 118 in a manner that leaves some unreacted methane in the hydrogen feed gas stream 422.

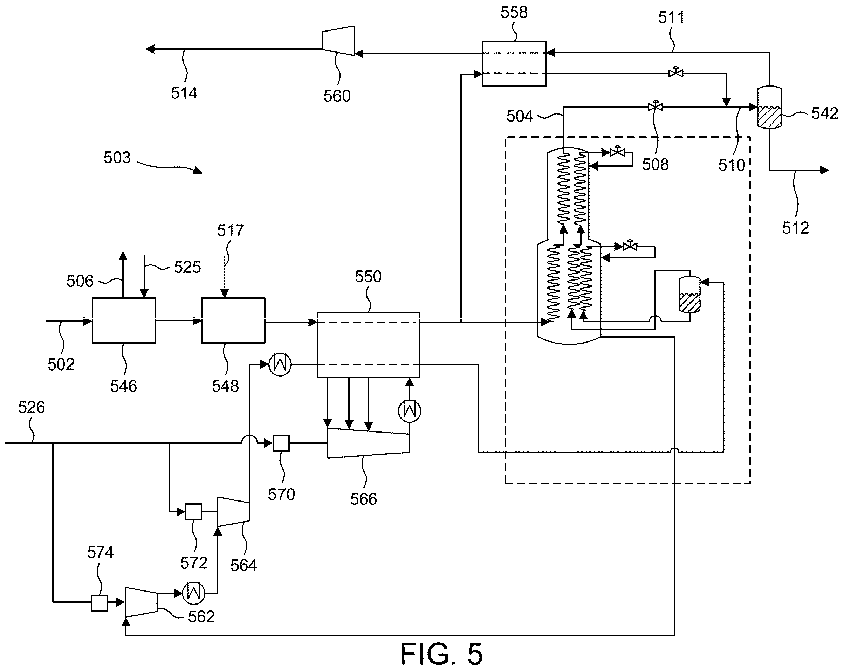

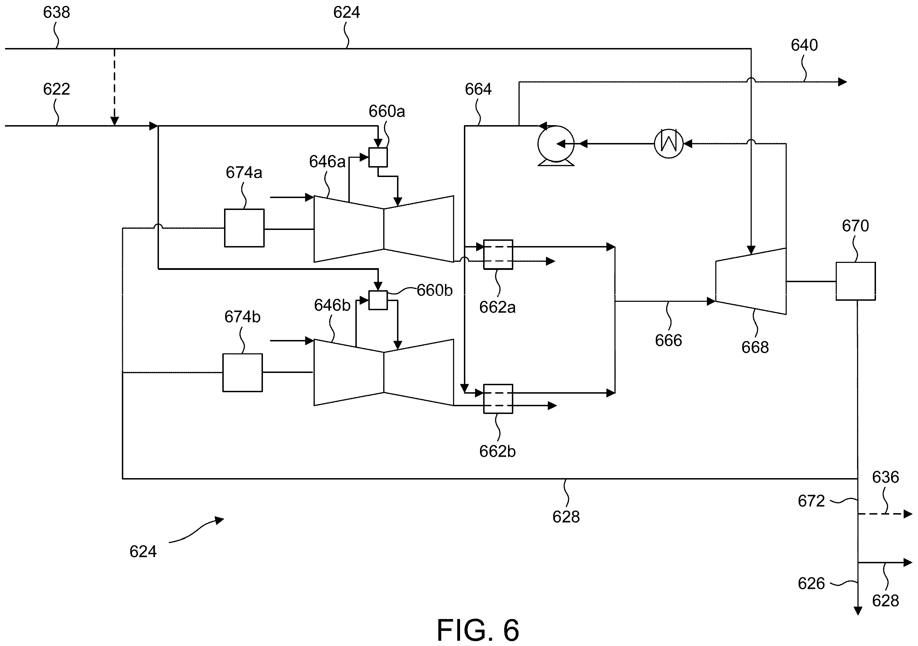

FIGS. 5 and 6 depict alternate embodiments of the natural gas liquefaction system 103 and the power generation system 124 of FIG. 1. In FIG. 5, reference numbers are increased by a factor of 300 relative to FIG. 2. For example, the natural gas feed stream 202 of FIG. 2 corresponds to a natural gas feed stream 502 of FIG. 5. Elements appearing in FIG. 2 that are identical to FIG. 5 may be numbered in FIG. 5 but not separately discussed in the specification. Similarly, In FIG. 6, reference numbers are increased by a factor of 200 relative to FIG. 4. For example, the hydrogen gas feed stream 422 of FIG. 4 corresponds to the hydrogen gas feed stream 622 of FIG. 6. Elements appearing in FIG. 4 that are identical in FIG. 6 may be numbered in FIG. 6 but not separately discussed in the specification.

Referring to FIG. 5, in this exemplary embodiment, power for the refrigeration compressors in the natural gas liquefaction system 103 is provided in the form of electrical energy 526 from the power generation system 124. The propane compressor 566 is mechanically coupled to an electric motor 570, while low pressure and high pressure mixed refrigerant compressors 562, 564 are mechanically coupled to electric motors 574, 572, respectively. All other aspects of the natural gas liquefaction system depicted in FIG. 5 are the same as previously described with respect to FIG. 2.

Referring to FIG. 6, the key difference between the power generation systems 424, 624 depicted in FIGS. 4 and 6, is that the power generation system 624 of FIG. 6 exports power to the natural gas liquefaction system solely in the form of electrical energy and steam and does not export power to the natural gas liquefaction system in the form of mechanical energy (as is done by the power generation system 424 of FIG. 4). In FIG. 6, two gas turbines 646a, 646b are mechanically coupled to electrical generators 674a, 674b, respectively. Heat recovery steam generators 662a, 662b generate high-pressure steam 666 by recovering heat from the gas turbine exhaust. The high-pressure steam 666 is expanded in steam turbine 668 which is coupled to electrical generator 670. A portion of the electric power from the three generators 674a, 674b, and 670 may be exported from the facility to the electric grid for other uses (represented by line 636). Energy stream 626 represents electric power consumed by the two compression trains shown in the natural gas liquefaction system 203, while the electrical energy represented by line 628 is provided for other consumers in the facility of FIG. 1, such as compressors, pumps, fan driven coolers etc.

Alternatively, the inventive concepts discussed herein could be applied to a retrofit modification of an existing natural gas liquefaction plant to reduce carbon footprint without any reduction in LNG production capacity. In fact, it is believed that inventive concepts disclosed herein enable a substantial reduction in carbon emissions (primarily CO2), while increasing LNG production capacity. Existing gas turbines 446a-d (See FIG. 4) could be modified to operate using a hydrogen or hydrogen enriched fuel. This would increase the mechanical power output 226a & 226b (See FIG. 2) to the refrigeration compressors, thereby increasing production. Production may be further increased since the fuel demand is increased since this will allow the temperature of LNG stream 204 to increase thereby lowering the power required for refrigeration in LNG production. To fully exploit this benefit, a flash compressor 260 may need to be modified or replaced in order to accommodate the increased flow. For this retrofit embodiment, the flash stream 214 is sent to a new hydrogen production system for example like as described in FIG. 3. This exemplary retrofit embodiment may also be applied to a gas turbine drive LNG plant of any configuration, or to an electric motor drive LNG plant with dedicated power generation, for example as described in FIGS. 5 & 6.

### Example 1

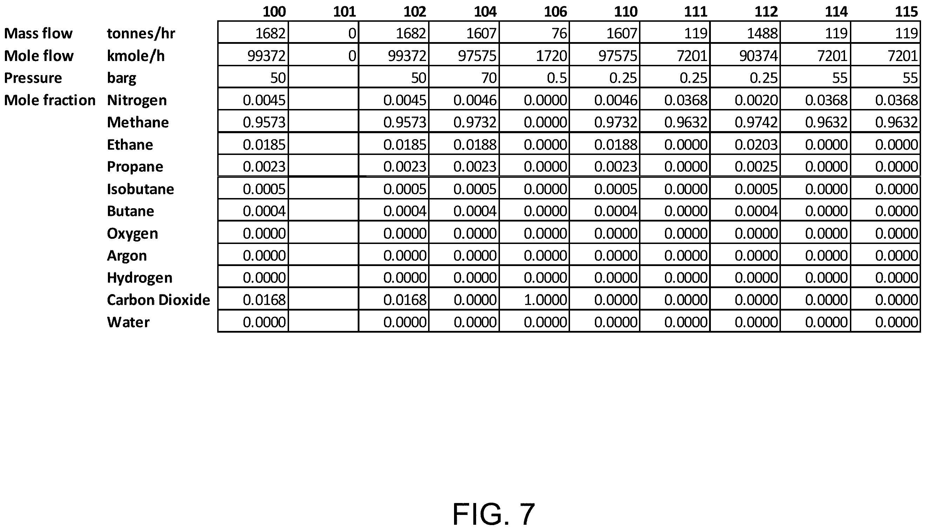

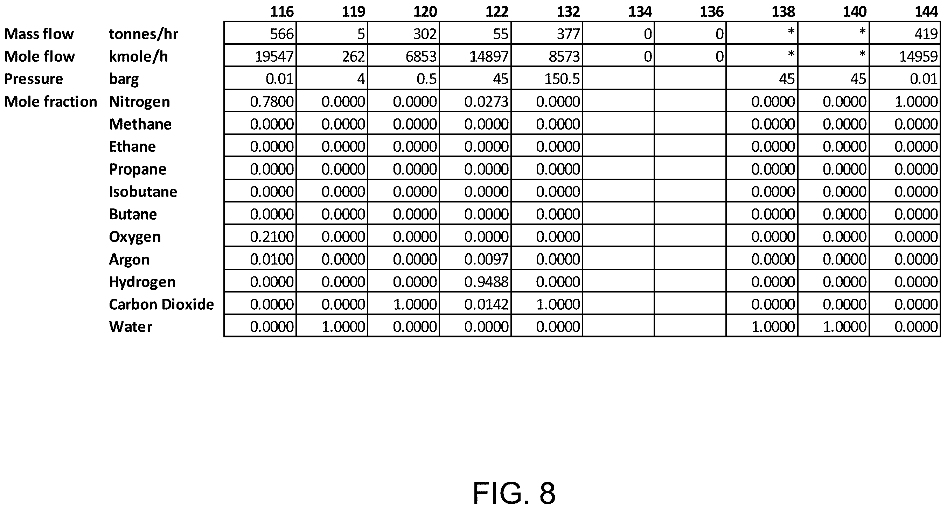

The following modeled example is based on the process diagrams represented by FIGS. 1-4 with material streams shown in FIGS. 7 and 8 and power or heat streams shown below in Table 1 corresponding to stream numbers shown in FIG. 1. Values for the mass and mole flow rates for streams 138 and 140 will be equal to each other, but will depend upon the details of the design of the hydrogen production system.

**Table 1**

| | **117** | **125** | **126** | **128** | **130** |
|---|---|---|---|---|---|
| Power/heat | 0 | 66.5 | 372.2 | 328.1 | 41.5 **MW** |

Table 2 shows key parameters for this example which uses five Baker Hughes / GE gas turbines for power generation and refrigerant compression. The process produces 13 million tonnes per year LNG while capturing 97% of the CO₂ for sequestration and converting 92.6% of the feed natural gas to LNG.

**Table 2**

| | |
|---|---|
| LNG Product | 13 million tonne/yr |
| CO2 Released | 13 tonne/hr |
| CO2 Captured | 377 tonne/hr |
| CO2 Captured | 97% |
| LNG Carbon Intensity | 0.01 CO2 released/LNG product (mass) |
| Autoconsumption | 7.40% feed natural gas not produced as LNG |
| Hydrogen Produced | 384 million standard ft³/day |

### Example 2

Table 3 shows key modeled parameters for an example of an alternate embodiment in which two GE frame 7F gas turbines are used for combined cycle power generation. In this example, the natural gas liquefaction system produces 11.5 million tonnes per year of LNG, while capturing 97% of the CO₂ for sequestration and converting 94.3% of the feed natural gas to LNG product.

**Table 3**

| | |
|---|---|
| LNG Product | 11.5 million tonne/yr |
| CO2 Released | 8 tonne/hr |
| CO2 Captured | 264 tonne/hr |
| CO2 Captured | 97% |
| LNG Carbon Intensity | 0.01 CO2 released/LNG product (mass) |
| Autoconsumption | 5.70% feed natural gas not produced as LNG |
| Hydrogen Produced | 245 million standard ft³/day |

As such, an invention has been disclosed in terms of preferred embodiments and alternate embodiments thereof. Of course, various changes, modifications, and alterations from the teachings of the present invention may be contemplated by those skilled in the art without departing from the intended spirit and scope thereof. It is intended that the present invention only be limited by the terms of the appended claims.

## Claims

1. A method comprising:
(a) at least partially liquefying a natural gas feed stream in a natural gas liquefaction system to form an LNG stream, the natural gas liquefaction system including at least one compressor;
(b) separating the LNG stream into a flash vapor stream and an LNG product stream;
(c) passing at least a portion of the flash vapor stream to a hydrogen production system;
(d) reacting at least a portion of the flash vapor stream in the hydrogen production system to form a hydrogen containing stream and a first CO2-enriched stream;
(e) generating power in a power generating system using at least a portion of the hydrogen containing stream; and
(f) providing power to the at least one compressor with at least a portion of the power generated in step (e).

2. The method of claim 1, wherein the flash vapor stream is at least 50 mol % methane; and/or
wherein the hydrogen containing stream is at least 80 mol % hydrogen.

3. The method of claim 1 or 2, further comprising:
(g) separating a second CO2-enriched stream from the natural gas feed stream before performing step (a); and
(h) combining the first CO2-enriched stream and the second CO2-enriched stream to form a combined CO2 stream; and optionally
(i) using refrigeration duty from the natural gas liquefaction system, liquefying at least a portion of one selected from the group of the first CO2-enriched stream, the second CO2-enriched stream, and the combined CO2-enriched stream.

4. The method of any one of claims 1 to 3, wherein step (d) further comprises reacting at least a portion of the flash vapor stream and an ambient air stream in the hydrogen production system to form the hydrogen containing stream and the first CO2-enriched stream.

5. The method of any one of claims 1 to 4, wherein step (d) further comprises reacting at least a portion of the flash vapor stream and an oxygen containing stream in the hydrogen production system to form the hydrogen containing stream, the first CO2-enriched stream, a first steam stream, and a waste nitrogen stream.

6. The method of claim 5, wherein the oxygen containing stream is ambient air; or
wherein the method further comprises:
(j) passing an ambient air stream through an air separation unit to produce the oxygen containing stream and a nitrogen enriched stream; and optionally
wherein step (e) further comprises generating power in a power generating system using the hydrogen containing stream and at least a portion of the nitrogen enriched stream.

7. The method of any one of claims 1 to 6, wherein step (e) further comprises generating power in a power generating system using the hydrogen containing stream and at least one steam stream from the hydrogen production system or power generating system; and/or
wherein step (e) further comprises generating power in a power generating system using the hydrogen containing stream to drive at least one gas turbine and a first steam stream to drive at least one steam turbine.

8. The method of any one of claims 1 to 7, wherein the power generated in step (e) comprises electrical power and step (f) comprises providing at least a portion of the electrical power to at least one motor attached to the at least one compressor; and/or
wherein the power generated in step (e) comprises electrical power and step (f) comprises providing at least a portion of the electrical power to at least one of the hydrogen production system and the natural gas liquefaction system; and/or
wherein the power generated in step (e) comprises electrical power and the method further comprises:
(k) exporting at least a portion of the electrical power to a process that is external to the natural gas liquefaction system, the hydrogen production system, and the power generating system.

9. The method of any one of claims 1 to 8, wherein step (e) further comprises generating power in a power generating system using the hydrogen containing stream and at least one methane-containing stream, and optionally
wherein the at least one methane-containing stream comprises at least one selected from the group of a natural gas feed stream and the flash vapor stream.

10. The method of any one of claims 1 to 9, further comprising:
(I) exporting at least a portion of the hydrogen containing stream produced in step (d) to a use that is external to the natural gas liquefaction system, the hydrogen production system, and the power generating system.

11. The method of any one of claims 1 to 10, wherein step (f) comprises driving the at least one compressor by mechanically coupling at least one gas turbine of the power generating system to the at least one compressor of the natural gas liquefaction system.

12. The method of any one of claims 1 to 11, further comprising:
(m) cooling the hydrogen production system using refrigeration from the natural gas production system; and/or
(n) using heat generated from at least one of the hydrogen production system and the power generating system to provide heat duty for drier unit, the drier until being adapted to separate moisture from a natural gas feed stream for the natural gas liquefaction system; and/or
(o) dividing the natural gas feed stream into a first portion and a second portion, performing step (a) on the first portion of the natural gas feed stream, and combining the second portion of the natural gas feed stream with the flash vapor stream before performing step (d).

13. The method of any one of claims 1 to 12, wherein step (a) comprises at least partially liquefying the natural gas feed stream in the natural gas liquefaction system to form the LNG stream, the natural gas liquefaction system including a closed loop refrigeration system having at least one compressor.

14. A method of retrofitting an existing natural gas liquefaction system that at least partially liquefies natural gas feed stream at a feed temperature to form an LNG product at a product temperature, the natural gas liquefaction system comprising at least one compressor, the method comprising:
(a) adding a hydrogen production system that reacts at least a portion of endflash produced by the natural gas liquefaction system to form a hydrogen-containing stream;
(b) generating power in a power generating system using the hydrogen containing stream; and
(c) providing power to the at least one compressor with at least a portion of the power generated in step (b).

15. The method of claim 14, further comprising:
(d) decreasing a difference between the feed temperature and the product temperature, thereby producing more endflash per cubic foot of natural gas processed than was produced prior to retrofit.

16. The method of claim 14 or 15, further comprising:
(e) adding the power generating system; and/or
(f) wherein the power generating system was adapted to provide power to the natural gas liquefaction system prior to retrofit, modifying at least one existing gas turbine in the power generating system to be fueled by the hydrogen containing stream; and/or
(g) generating more power with at least one existing gas turbine after retrofit than prior to retrofit.

17. The method of any one of claims 14 to 16, further comprising:
(h) producing a second mass flow rate of LNG product into an LNG storage tank after retrofit that no less than a first mass flow rate of LNG product into the LNG storage tank produced prior to retrofit.

18. The method of any one of claims 14 to 17, further comprising:
(i) separating at least 80% of carbon dioxide contained in the endflash using the hydrogen production system.
